# EUROPÄISCHE PATENTSCHRIFT

(11) **EP 1 533 099 B1**
(45) Veröffentlichungstag und Bekanntmachung des Hinweises auf die Patenterteilung: **31.10.2007**
(21) Anmeldenummer: 05004302.5
(22) Anmeldetag: 28.09.2001
(51) Int. Cl.: B29C 45/56

(54) **Verfahren zum Herstellen von dickwandigen Formteilen**
Method for producing thick-walled moulded parts
Procédé pour la production de pièces moulées à paroi épaisse

(30) Priorität: 02.10.2000 DE 10048861
(43) Veröffentlichungstag der Anmeldung: 25.05.2005
(62) Teilanmeldung aus: 01986636.7
(73) Patentinhaber: Krauss Maffei GmbH, 80997 München (DE)
(72) Erfinder: Klotz, Bernd, 85232 Günding (DE)
(74) Vertreter: Wilhelm, Ludwig

(56) Entgegenhaltungen:
- EP-A- 0 477 967
- WO-A-98/10417
- DE-A1- 2 702 412
- DE-A1- 3 414 101
- DE-A1- 3 906 564
- DE-A1- 19 843 921
- GB-A- 581 197
- US-A- 5 176 859
- US-A- 6 010 656

## Beschreibung

Derartige "dickwandige Formteile" sind beispielsweise Brillengläser, die zum einen aus Glas, andererseits zunehmend auch aus Kunststoff gefertigt werden. Dabei kommen beispielsweise duroplastische Gussmassen (CR39) und Thermoplaste zur Anwendung, wobei je nach Einsatz Polystyrol (PS), Polymethylmethacrylat (PMMA) oder Polycarbonat (PC) verwendet werden; aufgrund der hohen Schlagfähigkeit wird verstärkt PC eingesetzt.

Bei bekannten Verfahren werden Linsenrohlinge gleichmäßiger Wandstärke (1,5 - 3 mm) in Zykluszeiten von unter 30 s hergestellt, und im Normalfall wird dabei der Standard-Spritzgießprozess verwendet. Die Kunststoffmasse wird in der Füllphase über kleindimensionierte Kanäle in die Linsenkavität eingebracht. Weil amorphe Kunststoffe in der Abkühlphase eine hohe Dichtereduktion (10 - 20 %) erfahren, wird diese Materialschwindung in einer folgenden Nachdruckphase durch Nachfüttem von plastischer Schmelze vom Spritzkolben der Spritzgießmaschine ausgeglichen.

Bei einem Standard-Sprüzprägeprozess wird im Unterschied zum Standard-Spritzgießprozess die Kunststoffmasse in einer ersten Füllphase in eine vorvergrößerte Kavität eingebracht, und diese Kunststoffmasse wird folgend mittels einer axialen Werkzeugprägung verprägt. Das Massegewicht, das in der ersten Füllphase in die vorvergrößerte Kavität eingebracht wird, entspricht dabei dem Massegewicht der später entnommenen Teile. Mit der axialen Werkzeugbewegung, diese kann sowohl durch Werkzeugtechnik als auch mit Maschinentechnik eingeleitet werden, wird die vorvergrößerte Kavität verkleinert und die Restfüllung der Kavität wird vorgenommen. Das Standard-Spritzprägeverfahren wird eingesetzt für einfache optische Teile wie Linsen, um Einfallstellen als Folge von Materialschwindung zu vermeiden.

Um bei Linsen mit negativem Brechungsindex (innen dünn, außen dick) Bindenähte zu vermeiden, wird gemäß der EP 0 144 622 und der US 4,540,534 in einer ersten Füllphase die Kunststoffmasse in eine vorvergrößerte Kavität eingebracht, bis diese vollständig gefüllt ist. Dann wird folgend eine axiale Werkzeugbewegung eingeleitet, und die vorvergrößerte Kavität wird verkleinert. Eine definierbare Menge Kunststoffmasse wird dabei aus der Kavität verdrängt. Ansonsten entspricht die Vorgehensweise dem Standard-Spritzprägeverfahren.

Eine entsprechende Vorgehensweise wird durch die US-A-4,828,769 vorgeschlagen. wobei hier die Prägephase beginnt, bevor die erste Einspritzphase abgeschlossen wurde. Auch dieses Verfahren kann für optische Teile verwendet werden; eine bekannte Anwendung ist die Herstellung von DVD.

Die DE 3414101 A1 offenbart ein Verfahren zum Herstellen von insbesondere dünnwandigen Kunststoff-Formteilen wie beispielsweise Reflektorbauteilen für Signalisieroder Beleuchtungsvorrichtungen für Kraftfahrzeuge. Hierbei wird über einen in der Spritzachse liegenden, zentralen Angusskanal Kunststoffmaterial in eine Kavität veränderbarer Größe eingespritzt und ausgeformt. Bisher wurde dabei ein vorbestimmtes Volumen an Kunststoffmaterial in eine vorvergrößerte Kavität eingespritzt und durch Zufahren der Form ausgeformt, wobei es Probleme gab, die gewünschte Oberflächengüte zu erzielen. Zur Vermeidung dieser Probleme wird gemäß der DE 3414101 A1 vorgeschlagen, in einer ersten Phase die Kavität konstant zu halten und während dieser Phase zunächst einen Vorformling in der Kavität auszubilden. Durch weiteres Einspritzen von Kunststoffmaterial und gleichzeitiges Vergrößern der Kavität durch Zurückziehen eines Kolbens wird der Vorformling in axialer Richtung vergrößert. Wenn der Vorformling die gewünschte Größe erreicht hat, wird der Kolben bis auf einen Anschlag vorgefahren und die Kavität auf die Ausgangsgröße verkleinert, wobei der Vorformling in die Breite gedrückt und das Kunststoff-Formteil ausgeformt wird. Zum Herstellen von dickwandigen optischen Linsen ist dieses Verfahren schon deshalb nicht geeignet, weil durch den in der Spritzachse liegenden Angusskanal Markierungen in der Mitte der Linse auftreten würden. Außerdem kann die Kavität zu keinem Zeitpunkt kleiner gemacht werden als die Größe des Kunststoff-Formteils selbst.

Ein weiteres Verfahren zur Herstellung von optischen Linsen ist aus der gattungsbildenden GB-A-581197 bekannt. Der Formhohlraum für eine Linse wird von federkraftbeaufschlagten Formeinsätzen gebildet. In diesen Formhohlraum wird Kunststoffschmelze eingespritzt und der Formhohlraum mit zunehmender Füllung kontinuierlich gegen die Kraft der Federn vergrößert, bis durch Anschläge die gewünschte Linsendicke erreicht worden ist.

Obwohl die oben erwähnten Verfahren befriedigende Ergebnisse bei der Herstellung dünnwandiger Kunststoff-Formteile, beispielsweise dünner Linsen, liefern, ergeben sich erhebliche Probleme bei der Ausbildung von dickwandigen Linsen.

So können Einfallstellen aufgrund von Materialschwindung auftreten, es können sich Oberflächenmarkierungen ergeben, weil die Kunststoffmasse nicht in einem optimalen Quellfluss in die Kavität einfließen kann. Es können sich kalte Randschichten in der Füllphase verschieben. Durch Erhöhung der Werkzeugtemperatur bis nahe der Glastemperatur (TG = ca. 140°C bei PC) wird die Entstehung von kalten Randschichten unterdrückt. Daraus ergibt sich eine verlängerte Zykluszeit.

Um einen nahezu optimalen Quellfluss sicherzustellen, werden große Teilanschnitte benötigt, die anschließend staubfrei abgeschnitten werden müssen und in der Regel nicht mehr für die Herstellung von optischen Teilen verwendet werden können und als Abfall entsorgt werden.

Um eine gute Abformung der Werkzeugkavitätenoberfläche zu erzielen, muss eine hohe Werkzeugtemperatur für die Füllphase gewählt werden. Diese liegt nahe der Glastemperatur des Kunststoffes, so dass damit ein hoher Energieverbrauch verbunden ist.

Der Erfindung liegt somit die Aufgabe zugrunde, ein Verfahren zum Herstellen von dickwandigen optischen Linsen anzugeben, das sich durch eine wirtschaftliche und einfache Verfahrensführung auszeichnet und mit dem Kunststoff-Formteile mit optimaler Oberflächenbeschaffenheit herstellbar sind.

Diese Aufgabe wird durch ein Verfahren gemäß Anspruch 1 gelöst; die abhängigen Ansprüche betreffen Weiterentwicklungen der Erfindung.

Das erfindungsgemäße Verfahren macht sich die Erkenntnis zunutze, dass die Herstellung von relativ dünnwandigen Kunststoff-Formteilen mit guter Oberftächenbeschaffenheit relativ unproblematisch erfolgen kann. Dementsprechend wird diese Erkenntnis auf dickwandige Formteile umgesetzt, und das erfindungsgemäße Verfahren gliedert sich in zwei Phasen. In der ersten Phase wird eine relativ dünnwandige Linse mit optimaler Oberflächenqualität erzeugt, und in einer zweiten Phase wird die Linse auf eine Endwandstärke durch Zufuhr von Kunststoffmaterial "aufgeblasen".

Nach der ersten Phase oder auch nach der zweiten Phase kann eine Kompressionsphase durchgeführt werden, um Materialschwindung und somit Einfallstellen zu vermeiden.

Zum Vergrößern der Kavität in der zweiten Phase wird erfindungsgemäß ein Prägestempel eingesetzt, der linear verschieblich ist und einen Teil der Kavität definiert. Dabei ist vorzugsweise der Prägestempel im Bereich seines Formendes, parallel zu seinem Verschiebeweg von der Wandung eines Formwerkzeugs durch eingespritztes Kunststoffmaterial isoliert. Es ist deshalb nicht erforderlich, das Formwerkzeug in dieser Phase auf einer erhöhten Temperatur zu halten.

Andererseits können jedoch Abkühleffekte in der Kavität nicht vollständig vermieden werden, so dass bei Verwendung eines schneckenwegabhängigen oder schließwegabhängigen Schließkraftprofils der resultierende Innendruck abnehmen würde. Dementsprechend wird erfindungsgemäß vorgeschlagen, ein innendruckgeregeltes Schließkraftprofil zu verwenden.

Bei der Vorrichtung zur Durchführung des erfindungsgemäßen Verfahrens ist zumindest das kavitätseitige Ende des Prägestempels von einem Hohlraum umgeben, der mit der Kavität kommuniziert und in den eingespritztes Kunststoffmaterial eindringt. Dieser Hohlraum erstreckt sich zumindest über den Hub des verschiebbaren Prägestempels, so dass der Prägestempel von dem Werkzeug zumindest in dem Bereich durch eingedrungenes Kunststoffmaterial isoliert wird.

Ausführungsformen der Erfindung werden anhand der beigefügten Zeichnungen erläutert. Es zeigen:
- **Fig. 1:**: eine schematische Darstellung im Querschnitt der Formvorrichtung,
- **Fig. 2A, 2B:**: entsprechende Querschnittsdarstellungen wie die Fig. 1, wobei das Formwerkzeug in zwei verschiedenen Positionen ist,
- **Fig. 3:**: ein Prozessablaufdiagramm.

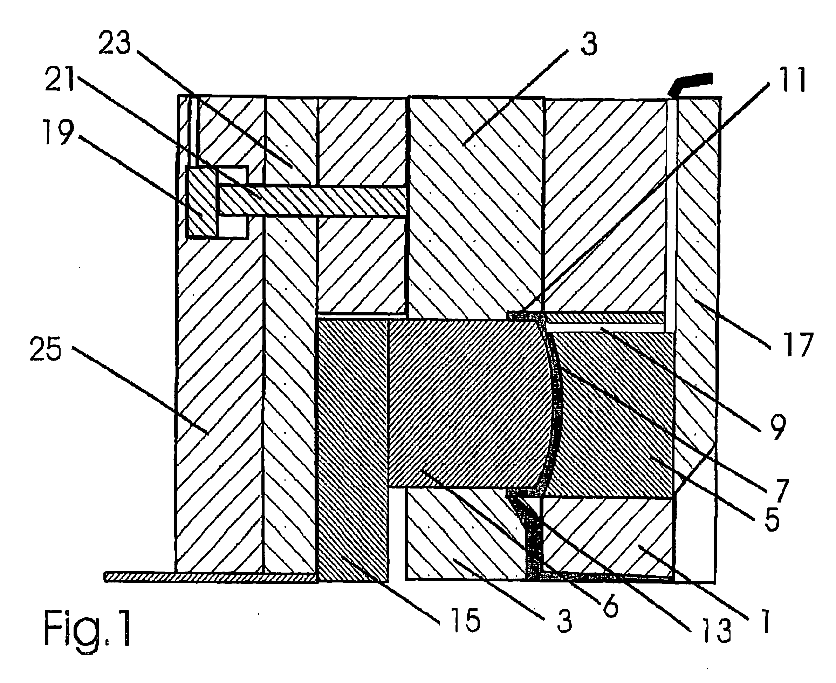

Gemäß Fig. 1 umfasst die Vorrichtung zur Durchführung des erfindungsgemäßen Verfahrens eine erste Formplatte 1, in die ein Linseneinsatz 5 eingesetzt ist. Die erste Formplatte 1 stützt sich an einer Stützplatte 17 ab. Eine zweite Formplatte 3 wirkt mit der ersten Formplatte 1 zusammen und trägt einen Prägestempel 6, der in Axialrichtung (vertikal Richtung der Fig. 1) über eine Antriebsplatte 15 bewegbar ist. Der Linseneinsatz 5, die zweite Formplatte 3 und der Prägestempel 6 bilden eine Kavität 7, die über einen Anguss 13 mit flüssigem Kunststoffmaterial beschickt werden kann. Dabei dringt insbesondere auch Kunststoffmaterial in den seitlichen Bereich 11 zwischen der Formplatte 3 und dem Prägestempel 6 ein und isoliert das entsprechende Ende des Prägestempels 6 vom temperierten Werkzeug. Das Material in diesem Bereich bildet also gewissermaßen einen "Isolierrand".

Während des Füllens der Kavität wird die Formplatte 3 durch eine Hydraulikvorrichtung 21. 19 an der Formplatte 1 vorgehalten, um während des Befüllens ein Öffnen der Form zu verhindern.

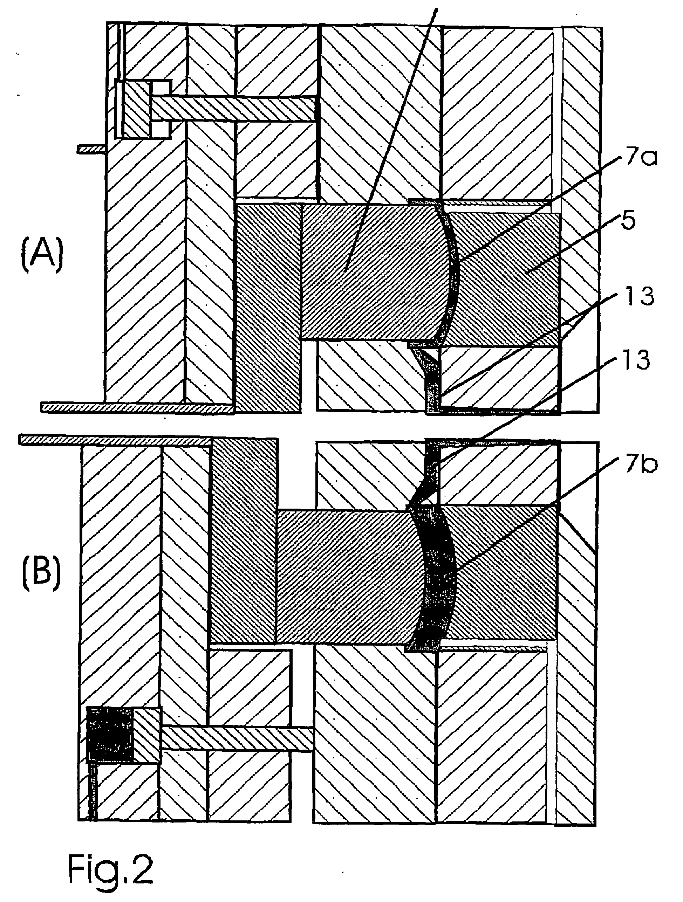

Figur 2 zeigt eine der Figur 1 entsprechenden Darstellung in zwei unterschiedlichen Positionen des Prägestempels. In der Stellung A ist der Prägestempel so eingestellt, dass eine minimale Kavität 7a vorhanden ist, und die Stellung B zeigt das Werkzeug mit maximaler Kavität 7b.

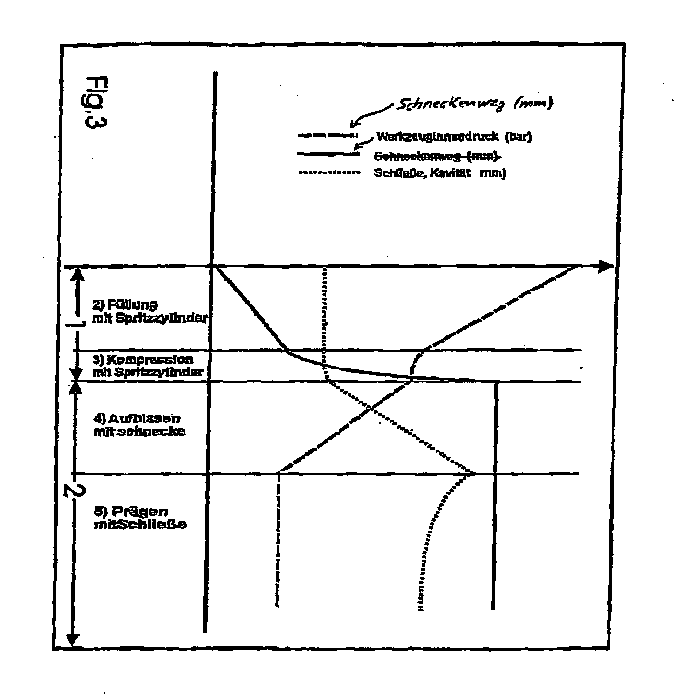

Zur Erläuterung des Prozessablaufs wird auf die Fig. 3 Bezug genommen. Zunächst wird das Werkzeug vollständig geschlossen und eine Kavität 7a geringer Größe entsprechend einem dünnwandigen Formteil eingestellt. In die minimale Kavität 7a wird plastisches Kunststoffmaterial durch einen Spritzzylinder oder die Schnecke einer Spritzgießmaschine eingebracht, bis die minimale Kavität vollständig gefüllt ist. Daran schließt sich eine kurze Kompressionsphase an (optional), um die Oberfläche bei hohem Forminnendruck optimal abzuformen.

Anschließend wird durch fortgesetztes Einspritzen von Kunststoffmaterial und gleichzeitiges Vergrößern der Kavität, bis eine Kavität 7b entsprechend dem gewünschten dickwandigen Kunststoff-Formteil erreicht ist, die Kunststoffmasse von Spritzzylinder der Spritzgießmaschine bis zum Erreichen einer definierten Teilwandstärke "aufgeblasen", und zwar optional schneckenwegabhängig oder schließenwegabhängig. Daran schließt sich eine Prägephase an, in der zur Vermeidung von Einfallstellen infolge von Materialschwindung eine Massenkompression durchgeführt wird. Nach dem Ausformen des Kunststoff-Formteils kann die Form geöffnet und das Kunststoff-Formteil entnommen werden, woran sich ein weiterer Zyklus anschließt.

Die Größe der Kavität wird mit dem linear verschiebbaren Prägestempel 6 geändert, wobei ein Ende des Prägestempels 6 die Dicke der Kavität definiert und wobei man mindestens entlang des Hubs des Prägestempels 6 dieses Ende seitlich durch eingespritztes Kunststoffmaterial thermisch gegen die Formhälfte 3 isoliert. Durch den erfindungsgemäßen "Isolierrand" wird der Prägestempel vom temperierten Werkzeug isoliert, so dass er lange Zeit axial beweglich sein kann. Die Dicke des Isolierrandes ist abhängig von der Teildicke und der daraus resultierenden Zykluszeit (oft 6 Min. und länger). Ohne Isolierrand oder zu dünnem Isolierrand wird der Prägestempel durch die sich bildende kalte Randschicht am Linsenaußenrand gebremst und wäre dann nicht mehr axial prägefähig. Die Folge wären Einfallstellen infolge Materialschwindung.

Um weiterhin Einfallstellen zu vermeiden, ist es wichtig, dass der Innendruck der Kavität möglichst konstant ist. Aus diesem Grund ist vorzugsweise ein Innendruckgeber 9 vorhanden (vgl. Fig. 1), um den Innendruck in der Kavität zu ermitteln, so dass der Prozess innendruckabhängig geregelt werden kann.

Bei dem erfindungsgemäßen Verfahren ergeben sich diverse Vorteile im Vergleich mit dem Stand der Technik. So gibt es wegen der abschließenden Prägephase im Ablaufschritt (5) keine Materialschwindung und somit ergeben sich keine Einfallstellen.

Durch die abschließende Prägephase (5) vermeidet der Prägestempel vollflächig die Bildung von Einfallstellen und bringt vollflächig Innendruck auf die Linse. Es reicht somit aus, eine Linse mit wenig Innendruck und deshalb mit wenig eingefrorenen Spannungen herzustellen.

Die üblichen Werkzeugtemperaturen bei dünnen Linsen (2 - 3 mm) in PC liegen bei 80°C_ Die bei dicken Linsen (13 mm) liegen bei ca. 120°C. Diese hohe Temperatur wird benötigt, damit die resultierenden Fehler wie "Verschieben von kalten Randschichten" und fehlende Oberflächenbrillanz zu vermeiden. Die Werkzeugtemperatur muss deshalb während der Füllphase so nahe wie möglich bei der Glastemperatur liegen. Es ergibt sich eine lange Zykluszeit von oft mehr als 6 Minuten.

Anders bei dem neuen Verfahren. Hier bildet sich bereits in der Füllphase ein Innendruck in der Kavität infolge des Füllwiderstandes. Bereits mit Werkzeugtemperaturen von ca. 80°C (bei PC) erfolgt kein Verschieben von kalten Randschichten und es ergibt sich eine optimale Oberflächenausprägung und damit eine hohe Oberflächenbrillanz. Eine Reduktion der Zykluszeit um bis zu 50 % ist erreichbar.

Wegen der dünnen Wandstärken der vorverkleinerten Kavität bildet sich auch bei niederviskosen Kunststoffen ein optimaler Quellfluss. Es ist deshalb möglich, kleine Anschnitte (Punktanschnitt, Tunnelanschnitt) zu verwenden. Der Kaltkanal kann deshalb nach der Teilentformung (Punktanschnitt) leicht von der Linse getrennt werden. Am Beispiel Tunnelanschnitt ist auch eine automatische Trennung des Kaltkanals bei der Werkzeugöffnung möglich.

Weil auf den Schwindungsausgleich durch den Spritzzylinder der Spritzgießmaschine vollständig verzichtet werden kann und weil die Ablaufschritte bis zum abschließenden Prägen innerhalb kurzer Zeit (7 Sekunden) abgeschlossen sind, können kleine Kaltkanalquerschnitte verwendet werden. Üblich ist eine Kaltkanaldicke, die gleich der Dicke der vorverkleinerten Kavität ist. Die Linsendicke wird im Ablaufschritt (4), d. h. dem Aufblasen der dünnen Linse, hergestellt. Die resultierende Linsendicke ergibt sich durch die Menge des eingespritzten Kunststoffs. Es ist also nicht erforderlich, Einsätze im Werkzeug zu wechseln, um Teilwandstärken zu ändern, so dass in einem Werkzeug eine Vielzahl von Linsendicken hergestellt werden kann.

## Patentansprüche

1. Verfahren zum Herstellen dickwandiger optischer Linsen durch Einspritzen von Kunststoffmaterial in eine Form mit veränderbarer Kavität,
**dadurch gekennzeichnet,**
**dass** in einer ersten Phase eine relativ dünnwandige Linse mit optimaler Oberflächenqualität erzeugt wird und dass in einer zweiten Phase die Linse auf eine Endwandstärke durch Zufuhr von Kunststoffmaterial aufgeblasen wird.

2. Verfahren nach Anspruch 1.
**dadurch gekennzeichnet,**
**dass** nach der ersten Phase und/oder nach der zweiten Phase eine Kompressionsphase durchgeführt wird.

3. Verfahren nach Anspruch 1 oder 2,
**dadurch gekennzeichnet,**
**dass** man den Innendruck in der Kavität ermittelt und die Größe der Kavität mit einem linear verschiebbaren Prägestempel ändert, wobei der Innendruck in der Kavität möglichst konstant gehalten wird.

4. Verfahren nach Anspruch 3,
**dadurch gekennzeichnet,**
**dass** ein Ende des Prägestempels die Dicke der Kavität definiert und dass man mindestens entlang des Hubs des Prägestempels dieses Ende seitlich durch eingespritztes Kunststoffmaterial thermisch gegen eine Formhälfte isoliert

## Claims

1. A method for producing thick-walled optical lenses by injecting plastic material into a mould having a variable cavity, **characterised in that** in a first phase a relatively thin-walled lens having optimal surface quality is produced and that in a second phase the lens is inflated to a final wall thickness by supplying plastic material.

2. The method according to claim 1, **characterised in that** after the first phase and/or the second phase a compression phase is carried out.

3. The method according to claim 1 or 2, **characterised in that** the internal pressure in the cavity is determined and the size of the cavity is varied using a linearly displaceable compression ram, wherein the internal pressure in the cavity is kept constant as far as possible.

4. The method according to claim 3, **characterised in that** one end of the compression ram defines the thickness of the cavity and that this end is laterally thermally insulated towards one mould half by injected plastic material, at least along the compression ram.

## Revendications

1. Procédé de fabrication de lentilles optiques à parois épaisses par injection de matériau plastique dans un moule avec cavité modifiable,
**caractérisé en ce que**,
dans une première phase est produite une lentille à paroi relativement mince présentant une qualité de surface optimale, et **en ce que** dans une seconde phase la lentille est insufflée à une épaisseur de paroi finale par alimentation de matériau plastique.

2. Procédé selon la revendication 1,
**caractérisé en ce que**,
après la première phase et/ou la seconde phase est réalisée une phase de compression.

3. Procédé selon la revendication 1 ou 2,
**caractérisé en ce que**,
on détermine la pression interne dans la cavité et on modifie la dimension de la cavité avec un outillage de frappe pouvant être déplacé linéairement, la pression interne dans la cavité étant maintenue la plus constante possible.

4. Procédé selon la revendication 3,
**caractérisé en ce que**,
une extrémité de l'outillage de frappe définit l'épaisseur de la cavité, et **en ce qu'**on isole thermiquement contre une moitié de moule, au moins le long de la course de l'outillage de frappe, cette extrémité latéralement par injection de matériau plastique.
